# EUROPÄISCHE PATENTSCHRIFT

(11) **EP 2 825 511 B1**
(45) Veröffentlichungstag und Bekanntmachung des Hinweises auf die Patenterteilung: **08.05.2019**
(21) Anmeldenummer: 13709187.2
(22) Anmeldetag: 11.03.2013
(51) Int. Cl.: C04B 26/04, C04B 26/06, C04B 26/08, G10K 11/165, F16L 59/02, C08K 11/00, B29C 43/00, B29C 45/00, B29K 31/00, B29K 27/00, B29K 23/00, B29D 99/00, B29C 47/00, B29C 43/24, B29K 509/00, C04B 103/00

(54) **VERWENDUNG VON MISCHUNGEN ENTHALTEND ANORGANISCHE RESTSTOFFE UND REDISPERGIERBARE POLYMERE ZUR HERSTELLUNG VON VERBUNDSTOFFEN**
USE OF BLENDS OF INORGANIC WASTE MATERIALS AND REDISPERSIBLE POLYMERS FOR PRODUCING COMPOSITES
UTILISATION DE MÉLANGES DES MATIÈRES INORGANIQUES DE RESTES ET DES POLYMÈRES REDISPERSABLES POUR LA FABRICATION DE SUBSTANCES COMPOSITES

(30) Priorität: 13.03.2012 DE 102012203881
(43) Veröffentlichungstag der Anmeldung: 21.01.2015
(73) Patentinhaber: Wacker Chemie AG, 81737 München (DE)
(72) Erfinder: BIENERTH, Holger, 81825 München (DE); EDER, Klaus-Jürgen, 84335 Mitterskirchen (DE); WEBER, Karl, 84508 Burgkirchen (DE)
(74) Vertreter: Ege, Markus
(86) Internationale Anmeldenummer: PCT/EP2013/054906
(87) Internationale Veröffentlichungsnummer: WO 2013/135641

(56) Entgegenhaltungen:
- EP-A1- 2 397 516
- WO-A1-2004/071987
- WO-A1-2010/133560
- CH-A- 430 557
- CN-A- 101 428 986
- DE-A1- 2 042 176
- DE-A1-102009 003 196
- DE-A1-102009 046 810
- JP-A- H09 124 353
- US-A- 3 836 504
- US-A1- 2007 157 854

## Beschreibung

Die Erfindung betrifft die Verwendung von Mischungen enthaltend anorganische, kleinteilige Reststoffe und Polymere auf Basis ethylenisch ungesättigter Monomere zur Herstellung von Verbundstoffen, insbesondere zur Herstellung von Isolier- oder Dämpfungsmaterialien in Plattenform.

Verbundstoffe auf Basis von anorganischen Materialien sind vielfach bekannt. So beschreibt die US2009/0004459 Wandbauplatten basierend auf Silicaten und Vinylacetatpolymeren. Die US 2008/0115442 offenbart sandwichartig aufgebaute Composite aus Gips- bzw. Beton-Schichten, Polystyrol-Panelen sowie Glasfasernetzen. Die US 3836504 beschreibt Verfahren zur Herstellung von Verbundstoffen, in denen Mischungen von kleinteiligen anorganischen Stoffen und Polymeren auf Basis ethylenisch ungesättigter Monomere in Form von Emulgator-stabilisierten, wässrigen Dispersionen mittels thermoplastischer Umformungstechniken verarbeitet werden. Die DE 10 2009 003196 A1 befasst sich schließlich mit dem Einsatz von Schutzkolloid-stabilisierten, in Wasser redispergierbaren Polymerpulvern in faserhaltigen pastösen Baustoffmassen.

Bei der Verarbeitung von anorganischen Materialien fallen alljährlich immense Mengen an kleinteiligem Abfall an, wie beispielsweise Gips-, Beton- oder Silicat-Schleifstäube, die bisher meist nutzlos sind und auf teure Weise entsorgt werden müssen. Deswegen besteht Bedarf an Ansätzen, mit denen solche Abfallstoffe in werthaltige Produkte verarbeitet werden können. Dies ist aus ökonomischen Gründen wegen steigender Rohstoffkosten gewünscht, und auch weil an Stelle der teuren Entsorgung von Abfallstoffen werthaltige Produkte gewonnen werden können. Der effizientere Umgang mit Rohstoffen und damit verbunden zumeist auch ein geringerer Energieverbrauch ist auch aus ökologischen Gründen dringend geboten.

Vor diesem Hintergrund bestand die Aufgabe, neue Ansätze zu entwickeln, mit denen Verbundstoffe auf Basis anorganischer Materialien auf Material- und nach Möglichkeit Energie-sparende Weise zugänglich werden.

Diese Aufgabe wurde überraschenderweise gelöst, indem die bei den unterschiedlichsten Prozessen der Verarbeitung von anorganischen Materialien anfallenden kleinteiligen Reststoffe, wie Schleifstäube oder Sägespäne von beispielsweise Kalksteinen, mittels thermoplastischer Verarbeitungsverfahren unter Einsatz von Polymeren auf Basis ethylenisch ungesättigter Monomere in Form von Schutzkolloid-stabilisierten, in Wasser redispergierbaren Polymerpulvern zu Verbundstoffen verarbeitet wurden.

Gegenstand der Erfindung ist die Verwendung von Mischungen enthaltend ein oder mehrere anorganische, kleinteilige Reststoffe und ein oder mehrere Polymere auf Basis ethylenisch ungesättigter Monomere zur Herstellung von Verbundstoffen mittels thermoplastischer Umformungstechniken wie definiert in Anspruch 1.

Die anorganischen, kleinteiligen Reststoffe basieren beispielsweise auf anorganischen Materialien wie Oxiden, Hydroxiden, Carbonaten, Silicaten, Sulfaten oder Sulfiden von Metallen oder Halbmetallen. Geeignete Metalle oder Halbmetalle sind beispielsweise Alkali-Metalle, wie Lithium, Natrium oder Kalium; Erdalkali-Metalle, wie Magnesium, Calcium, Barium; oder Atome aus der dritten Hauptgruppe, wie Aluminium oder Bor; aber auch Übergangsmetalle, wie Titan. Bevorzugte Metalle oder Halbmetalle sind Magnesium, Calcium, Barium oder Aluminium. Bevorzugte anorganische, kleinteilige Reststoffe basieren auf Gips, Kalk, insbesondere Calcium- oder Magnesium-Carbonat, Talk, Kieselsäuren, Kaolinen, Silicaten oder Titandioxid; besonders bevorzugt auf Gips, Kalk oder Kreide und am meisten bevorzugt auf Kalkstein oder Gips.

Die anorganischen, kleinteiligen Reststoffe können in beliebigen Formen vorliegen, wie beispielsweise in Form von Spänen, oder insbesondere in Form von Staub, Mehl oder Fasern.

Die anorganischen, kleinteiligen Reststoffe haben vorzugsweise Partikelgrößen von 0,1 µm bis 2.000 µm, besonders bevorzugt von 0,2 µm bis 1.000 µm, noch mehr bevorzugt von 0,2 µm bis 500 µm und am meisten bevorzugt von 0,2 µm bis 250 µm (Bestimmung mittels statistischer Lichtstreuung mit dem Gerät TGV-Coulter LS 13320). Vorzugsweise haben 0,1 bis 100 Vol.-%, mehr bevorzugt 80 bis 100 Vol.-% und insbesondere 90 bis 100 Vol.-% der anorganischen, kleinteiligen Reststoffe Partikelgrößen von 0,5 bis 2.000 µm, besonders bevorzugt von 0,5 bis 500 µm und am meisten bevorzugt von 0,5 bis 100 µm (Bestimmung mittels statistischer Lichtstreuung mit dem Gerät TGV-Coulter LS 13320). Ein Maximum, insbesondere das größte Maximum der Partikelgrößenverteilung der anorganischen, kleinteiligen Reststoffe liegt vorzugsweise im Bereich von 0,5 bis 200 µm und besonders bevorzugt von 5 bis 100 µm (Bestimmung mittels statistischer Lichtstreuung mit dem Gerät TGV-Coulter LS 13320). Falls die anorganischen, kleinteiligen Reststoffe nicht im Wesentlichen rund oder kugelförmig sind, beziehen sich die Angaben betreffend die Partikelgrößen vorzugsweise auf die Dimension der kleinteiligen Reststoffe mit der kleinsten Ausdehnung.

Fasern oder Späne haben vorzugsweise eine Länge von 0,1 mm bis 5 mm und besonders bevorzugt von 0,5 mm bis 2 mm. Zumeist sind die anorganischen, kleinteiligen Reststoffe aber im Wesentlichen rund oder kugelförmig.

Die anorganischen, kleinteiligen Reststoffe fallen beispielsweise beim Schleifen, Mahlen, Fräsen, Sägen, Bohren, Schälen oder Schneiden von anorganischen Materialien an. Bei den anorganischen, kleinteiligen Reststoffen kann es sich auch um Abrieb entsprechender Materialien handeln. Anorganische, kleinteilige Reststoffe fallen beispielsweise in der Bauindustrie, bei der Möbelherstellung, bei Steinmetzarbeiten oder allgemein bei der Verarbeitung von anorganischen Materialien an. In besonderem Umfang entstehen solche anorganischen, kleinteiligen Reststoffe beim Trockenbau oder bei der Bodenbelagsherstellung, insbesondere bei der Herstellung von Hohlböden oder Gipsplatten. Die anorganischen, kleinteiligen Reststoffe können bei den vorgenannten Prozessen schon in der gewünschten Form anfallen oder durch eine weitere Bearbeitung in die gewünschte Form gebracht werden, wie beispielsweise mittels Mahlen, Brechen, Quetschen oder Fällen.

Geeignete Polymere auf Basis ethylenisch ungesättigter Monomere sind beispielsweise solche auf der Basis von einem oder mehreren Monomeren aus der Gruppe umfassend Vinylester, (Meth)acrylsäureester, Vinylaromaten, Olefine, 1,3-Diene und Vinylhalogenide und gegebenenfalls weiteren damit copolymerisierbaren Monomeren.

Geeignete Vinylester sind beispielsweise solche von Carbonsäuren mit 1 bis 22 C-Atomen, insbesondere 1 bis 12 C-Atomen. Bevorzugt werden Vinylacetat, Vinylpropionat, Vinylbutyrat, Vinyl-2-ethylhexanoat, Vinyllaurat, Vinylmyristat, Vinylpalmitat, Vinylstearat, Vinylarachinat, 1-Methylvinylacetat, Vinylpivalat und Vinylester von α-verzweigten Monocarbonsäuren mit 9 bis 11 C-Atomen, beispielsweise VeoVa9^{R} oder VeoVa10^{R} (Handelsnamen der Firma Resolution). Besonders bevorzugt ist Vinylacetat.

Geeignete Acrylsäureester oder Methacrylsäureester sind beispielsweise Ester von unverzweigten oder verzweigten Alkoholen mit 1 bis 22 C-Atomen, insbesondere 1 bis 15 C-Atomen. Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, t-Butylacrylat, t-Butylmethacrylat, 2-Ethylhexylacrylat, Laurylacrylat, Myristylacrylat, Stearylacrylat, Palmitylacrylat, Laurylmethacrylat, Myristylmethacrylat, Stearylmethacrylat oder Palmitylmethacrylat. Besonders bevorzugt sind Methylacrylat, Methylmethacrylat, n-Butylacrylat, t-Butylacrylat oder 2-Ethylhexylacrylat.

Als Vinylaromaten bevorzugt sind Styrol, Methylstyrol und Vinyltoluol. Bevorzugtes Vinylhalogenid ist Vinylchlorid. Die bevorzugten Olefine sind Ethylen, Propylen und die bevorzugten Diene sind 1,3-Butadien oder Isopren.

Gegebenenfalls können noch 0,1 bis 10 Gew.-%, bezogen auf das Gesamtgewicht des Monomergemisches, Hilfsmonomere copolymerisiert werden. Bevorzugt werden 0,5 bis 5 Gew.-% Hilfsmonomere eingesetzt. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl-, und Diisopropylester sowie Maleinsäureanhydrid, ethylenisch ungesättigte Sulfonsäuren bzw. deren Salze, vorzugsweise Vinylsulfonsäure, 2-Acrylamido-2-methylpropansulfonsäure. Weitere Beispiele sind vorvernetzende Comonomere wie mehrfach ethylenisch ungesättigte Comonomere, beispielsweise Diallylphthalat, Divinyladipat, Diallylmaleat, Allylmethacrylat oder Triallylcyanurat, oder nachvernetzende Comonomere, beispielsweise Acrylamidoglykolsäure (AGA), Methacrylamidoglykolsäuremethylester (MAGME), N-Methylolacrylamid (NMA), N-Methylolmethacrylamid, N-Methylolallylcarbamat, Alkylether wie der Isobutoxyether oder Ester des N-Methylolacrylamids, des N-Methylolmethacrylamids und des N-Methylolallylcarbamats. Geeignet sind auch epoxidfunktionelle Comonomere wie Glycidylmethacrylat und Glycidylacrylat. Weitere Beispiele sind siliciumfunktionelle Comonomere, wie Acryloxypropyltri(alkoxy)- und Methacryloxypropyltri(alkoxy)-Silane, Vinyltrialkoxysilane und Vinylmethyldialkoxysilane, wobei als Alkoxygruppen beispielsweise Ethoxy- und Ethoxypropylenglykolether-Reste enthalten sein können. Genannt seien auch Monomere mit Hydroxy- oder CO-Gruppen, beispielsweise Methacrylsäure- und Acrylsäurehydroxyalkylester wie Hydroxyethyl-, Hydroxypropyl- oder Hydroxybutylacrylat oder - methacrylat sowie Verbindungen wie Diacetonacrylamid oder Acetylacetoxyethylacrylat oder -methacrylat.

Die Monomerauswahl bzw. die Auswahl der Gewichtsanteile der Comonomere erfolgt dabei so, dass im Allgemeinen eine Glasübergangstemperatur Tg von ≤ +120°C, vorzugsweise -50°C bis +60°C, noch mehr bevorzugt -30°C bis +40°C und am meisten bevorzugt -15°C bis +20°C, resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x1/Tg1 + x2/Tg2 + ... + xn/Tgn, wobei xn für den Massebruch (Gew.-%/100) des Monomeren n steht, und Tgn die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Bevorzugt werden Homo- oder Mischpolymerisate, welche ein oder mehrere Monomere aus der Gruppe Vinylacetat, Vinylester von α-verzweigten Monocarbonsäuren mit 9 bis 11 C-Atomen, Vinylchlorid, Ethylen, Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Styrol enthalten. Besonders bevorzugt werden Mischpolymerisate mit Vinylacetat und Ethylen; mit Vinylacetat, Ethylen und einem Vinylester von α-verzweigten Monocarbonsäuren mit 9 bis 11 C-Atomen; mit n-Butylacrylat und 2-Ethylhexylacrylat und/oder Methylmethacrylat; mit Styrol und einem oder mehreren Monomeren aus der Gruppe Methylacrylat, Ethylacrylat, Propylacrylat, n-Butylacrylat, 2-Ethylhexylacrylat; mit Vinylacetat und einem oder mehreren Monomeren aus der Gruppe Methylacrylat, Ethylacrylat, Propylacrylat, n-Butylacrylat, 2-Ethylhexylacrylat und gegebenenfalls Ethylen; mit 1,3-Butadien und Styrol und/oder Methylmethacrylat sowie gegebenenfalls weiteren Acrylsäureestern; wobei die genannten Gemische gegebenenfalls noch ein oder mehrere der obengenannten Hilfsmonomere enthalten können.

Die Herstellung der Polymerisate erfolgt in bekannter Weise beispielsweise nach dem Emulsionspolymerisationsverfahren oder nach dem Suspensionspolymerisationsverfahren in Gegenwart von Emulgatoren oder vorzugsweise von Schutzkolloiden, vorzugsweise nach dem Emulsionspolymerisationsverfahren, wobei die Polymerisationstemperatur im Allgemeinen 20°C bis 100°C, vorzugsweise 60°C bis 90°C beträgt, und bei der Copolymerisation von gasförmigen Comonomeren, wie Ethylen, vorzugsweise unter Druck, im Allgemeinen zwischen 5 bar und 100 bar, gearbeitet werden kann. Die Initiierung der Polymerisation erfolgt mit den für die Emulsionspolymerisation bzw. Suspensionspolymerisation gebräuchlichen wasserlöslichen bzw. monomerlöslichen Initiatoren oder Redox-Initiator-Kombinationen. Zur Steuerung des Molekulargewichts können während der Polymerisation regelnde Substanzen eingesetzt werden. Zur Stabilisierung können Schutzkolloide, gegebenenfalls in Kombination mit Emulgatoren, eingesetzt werden. Die Polymere liegen vorzugsweise in Form von Schutzkolloid stabilisierten, wässrigen Dispersionen vor.

Zur Stabilisierung des Polymerisationsansatzes gebräuchliche Schutzkolloide sind beispielsweise teilverseifte oder vollverseifte Polyvinylalkohole; Polyvinylpyrrolidone; Polyvinylacetale; Polysaccharide in wasserlöslicher Form wie Stärken (Amylose und Amylopectin), Cellulosen und deren Carboxymethyl-, Methyl-, Hydroxyethyl-, Hydroxypropyl-Derivate; Proteine wie Casein oder Caseinat, Sojaprotein, Gelatine; Ligninsulfonate; synthetische Polymere wie Poly(meth)acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere. Bevorzugt werden teilverseifte oder vollverseifte Polyvinylalkohole. Besonders bevorzugt sind teilverseifte Polyvinylalkohole mit einem Hydrolysegrad von 80 bis 95 Mol% und einer Höpplerviskosität in 4 %-iger wässriger Lösung von 1 bis 30 mPas (Methode nach Höppler bei 20°C, DIN 53015).

Geeignete Emulgatoren sind beispielsweise anionische, kationische oder nichtionische Emulgatoren, wie anionische Tenside, wie Alkylsulfate mit einer Kettenlänge von 8 bis 18 C-Atomen, Alkyl- oder Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen, oder nichtionische Tenside wie Alkylpolyglykolether oder Alkylarylpolyglykolether mit 8 bis 40 Ethylenoxid-Einheiten. Im Allgemeinen werden 1 bis 5 Gew.-% Emulgatoren eingesetzt, bezogen auf das Gesamtgewicht der Monomere. Vorzugsweise wird ohne Zusatz von Emulgatoren polymerisiert.

Die so erhältlichen wässrigen Dispersionen haben einen Feststoffgehalt von vorzugsweise 30 bis 75 Gew.-%, besonders bevorzugt 50 bis 60 Gew.-%.

Zur Überführung der Polymere in Wasser redispergierbare Polymerpulver können die Dispersionen, gegebenenfalls nach Zusatz von weiteren Schutzkolloiden als Trocknungshilfe, getrocknet werden, beispielsweise mittels Wirbelschichttrocknung, Gefriertrocknung oder Sprühtrocknung. Vorzugsweise werden die Dispersionen sprühgetrocknet. Die Sprühtrocknung kann dabei in üblichen Sprühtrocknungsanlagen erfolgen, wobei die Zerstäubung mittels Ein-, Zwei- oder Mehrstoffdüsen oder mit einer rotierenden Scheibe erfolgen kann. Die Austrittstemperatur wird im Allgemeinen im Bereich von 45°C bis 120°C, bevorzugt 60°C bis 90°C, je nach Anlage, Tg des Harzes und gewünschtem Trocknungsgrad, gewählt. Die Viskosität der zu verdüsenden Speise wird über den Feststoffgehalt so eingestellt, dass ein Wert von < 500 mPas (Brookfield-Viskosität bei 20 Umdrehungen und 23°C), bevorzugt < 250 mPas, erhalten wird. Der Feststoffgehalt der zu verdüsenden Dispersion beträgt > 35 %, bevorzugt > 40 %.

In der Regel wird die Trocknungshilfe in einer Gesamtmenge von 0,5 bis 30 Gew.-%, bezogen auf die polymeren Bestandteile der Dispersion, eingesetzt. Das heißt die Gesamtmenge an Schutzkolloid vor dem Trocknungsvorgang soll vorzugsweise mindestens 1 bis 30 Gew.-%, bezogen auf den Polymeranteil betragen; besonders bevorzugt werden insgesamt 5 bis 20 Gew.-% Schutzkolloid, bezogen auf die polymeren Bestandteile der Dispersion, eingesetzt. Geeignete Trocknungshilfen sind beispielsweise die bereits genannten Schutzkolloide.

Bei der Verdüsung hat sich vielfach ein Gehalt von bis zu 1,5 Gew.-% Antischaummittel, bezogen auf das Basispolymerisat, als günstig erwiesen. Zur Erhöhung der Lagerfähigkeit durch Verbesserung der Verblockungsstabilität, insbesondere bei Pulvern mit niedriger Glasübergangstemperatur, kann das erhaltene Pulver mit einem Antiblockmittel (Antibackmittel), vorzugsweise 1 bis 30 Gew.-%, bezogen auf das Gesamtgewicht polymerer Bestandteile, ausgerüstet werden. Beispiele für Antiblockmittel sind Ca- bzw. Mg-Carbonat, Talk, Gips, Kieselsäure, Kaoline wie Metakaolin, Silicate mit Teilchengrößen vorzugsweise im Bereich von 10 nm bis 10 µm.

Am meisten bevorzugt werden Redispersionspulver enthaltend Mischpolymerisate mit Vinylacetat und Ethylen oder Mischpolymerisate mit Vinylacetat, Ethylen und einem Vinylester von α-verzweigten Monocarbonsäuren mit 9 bis 11 C-Atomen als Basispolymerisat und teilverseiftem Polyvinylalkohol als Schutzkolloid.

Als in Wasser redispergierbare Polymerpulver oder Redispersionspulver bezeichnet man Pulverzusammensetzungen, welche mittels Trocknung der entsprechenden wässrigen Dispersionen von Polymerisaten in Gegenwart von Trocknungshilfen, insbesondere Schutzkolloiden, zugänglich werden. Auf Grund dieses Herstellungsprozesses wird das feinteilige Harz der Dispersion mit einer Trocknungshilfe bzw. einem Schutzkolloid ausreichender Menge umhüllt. Bei der Trocknung wirkt die Trocknungshilfe bzw. das Schutzkolloid wie ein Mantel, welcher das Zusammenkleben der Teilchen verhindert. Beim Redispergieren in Wasser löst sich die Trocknungshilfe bzw. das Schutzkolloid wieder in Wasser und es liegt eine wässrige Dispersion der ursprünglichen Polymerteilchen vor (Schulze J. in TIZ, No. 9, 1985).

Die Polymere werden in Form von in Wasser redispergierbaren Polymerpulvern eingesetzt.

Die Verbundstoffe basieren auf vorzugsweise 5 bis 80 Gew.-%, besonders bevorzugt 10 bis 50 Gew.-%- und am meisten bevorzugt 20 bis 40 Gew.-% an Polymeren; 20 bis 95 Gew.-%, besonders bevorzugt 50 bis 90 Gew.-% und am meisten bevorzugt 60 bis 80 Gew.-% an anorganischen, kleinteiligen Reststoffen, jeweils Gew.-% an anorganischen, kleinteiligen Reststoffen, jeweils bezogen auf das Gesamtgewicht aus Polymer und anorganischen, kleinteiligen Reststoffen.

Des Weiteren können die Verbundstoffe ein oder mehrere organische Füllstoffe enthalten, basierend beispielsweise auf Holz, Leder, Kokosmaterial, wie Kokosfasern, oder sonstige Naturfasern oder insbesondere Kork. Die organischen Füllstoffe liegen im Allgemeinen in partikulärer, insbesondere kleinteiliger Form vor. Kork stattet die Verbundstoffe mit besonders vorteilhaften Dämmeigenschaften aus; Leder ergibt organisches Material enthaltende Verbundstoffe mit vorteilhaftem Brandverhalten.

Die Verbundstoffe können neben den anorganischen, kleinteiligen Reststoffen ein oder mehrere weitere anorganische Füllstoffe enthalten. Die weiteren anorganischen Füllstoffe sind keine Reststoffe bzw. keine Abfallstoffe, sondern gezielt als Füllstoffe bereitgestellte anorganische Stoffe. Die weiteren anorganischen Füllstoffe können auch auf den weiter oben bei der Beschreibung der anorganischen, kleinteiligen Reststoffe aufgeführten anorganischen Materialien basieren.

Die weiteren anorganischen Füllstoffe zeichnen sich im Unterschied zu den erfindungsgemäßen Reststoffen allgemein durch eine einheitlichere Partikelgrößenverteilung aus. So weist die Volumenverteilungskurve der weiteren Füllstoffe vorzugsweise ≤ 2 Maxima und insbesondere nur ein Maximum auf. Die Volumenverteilungskurve der anorganischen, kleinteiligen Reststoffe hat vorzugsweise ≥ 3 Maxima und besonders bevorzugt ≥ 4 Maxima. Die Volumenverteilungskurve bildet die Verteilung des Gesamtvolumens der Partikel in Abhängigkeit von den Teilchendurchmessern der Partikel ab.

Bei den anorganischen, kleinteiligen Reststoffen beträgt das Verhältnis der beiden größten Maxima der Volumenverteilungskurve vorzugsweise 1 bis 2,4, besonders bevorzugt 1 bis 2 und am meisten bevorzugt 1 bis 1,5. Bei den weiteren anorganischen Füllstoffen beträgt das Verhältnis der beiden größten Maxima der Volumenverteilungskurve, sofern zwei Maxima vorhanden sind, vorzugsweise ≥ 2,5, besonders bevorzugt ≥ 3 und am meisten bevorzugt ≥ 3,5.

Bevorzugt ist der gemeinsame Einsatz von weiteren anorganischen Füllstoffen oder organischen Füllstoffen in Form von Fasern.

Die organischen Füllstoffe und/oder die weiteren anorganischen Füllstoffe können beispielsweise zu 0 bis 90 Gew.-%, vorzugsweise zu 10 bis 90 Gew.-%, besonders bevorzugt zu 10 bis 60 Gew.-% und am meisten bevorzugt zu 15 bis 40 Gew.-% eingesetzt werden, bezogen auf das Gesamtgewicht aus Polymer und anorganischen, kleinteiligen Reststoffen.

Gegebenenfalls können bei der Herstellung der Verbundstoffe noch Zusatzstoffe wie Gleitmittel, beispielsweise Calciumstearat, Weichmacher, Antioxidantien, UV-Stabilisatoren, Antistatika, Haftvermittler, Antiblockmittel, Farbstoffe, Pigmente, Füllstoffe, Verarbeitungshilfen, oder Peroxide wie Peroxodicarbonat zur Nachvernetzung eingesetzt werden. Bevorzugt sind hierbei Gleitmittel. Des Weiteren können neben den erfindungsgemäß eingesetzten Polymere zusätzlich herkömmliche Thermoplasten, Elastomere oder Duroplaste zugegeben werden. Additive können in den üblichen Mengen, wie beispielsweise zu 0 bis 2 Gew.-%, insbesondere 0 bis 1 Gew.-% und bevorzugt 0,5 bis 1 Gew.% eingesetzt werden, bezogen auf das Gesamtgewicht von Polymer und anorganischen, kleinteiligen Reststoffen.

Die einzelnen Bestandteile der Verbundstoffe werden gemischt und anschließend mittels der üblichen thermoplastischen Umformungstechniken zu Verbundstoffen verarbeitet.

Das Mischen kann beispielsweise in einem Heiß-Kühl-Mischer, aber auch über Direktgranulierung, beispielsweise in einem Extruder, Palltruder oder Agglomerator erfolgen. Vorzugsweise erfolgt das Mischen in einem Mehrwellenextruder, Planetwalzenextruder, besonders bevorzugt einem Zweiwellenextruder, insbesondere einem gegenläufigen Zweiwellenextruder.

Geeignete thermoplastische Umformungstechniken sind beispielsweise Extrudieren, Spritzgießen, Verpressen, Granulieren und Kalandrieren. Bevorzugt ist das Granulieren und insbesondere das Verpressen.

Vorzugsweise werden mittels thermoplastischer Umformungstechniken zuerst Granulate, Pellets oder Compounds hergestellt, die anschließend mittels weiterer thermoplastischer Umformungstechniken weiterverarbeitet werden. Die Granulate, Pellets oder Compounds haben Partikelgrößen von vorzugsweise 2 bis 6 mm.

Die Verarbeitungstemperatur beim Mischen beträgt im Allgemeinen 40°C bis 120°C, vorzugsweise 60°C bis 100°C. Beim thermoplastischen Verarbeiten beträgt die Verarbeitungstemperatur im Allgemeinen 80°C bis 220°C, vorzugsweise 120°C bis 180°C. Die genannten Temperaturbereiche sind besonders vorteilhaft, damit die Polymere, insbesondere die Polymere in Form von in Wasser redispergierbaren Polymerpulvern, und die weiteren Komponenten für die Herstellung der Verbundstoffe innig gemischt werden und die Polymere ihre Bindemittelwirkung entfalten. Bei höheren Temperaturen können Bestandteile der Verbundstoffe Schaden nehmen.

Die erfindungsgemäße Vorgehensweise eignet sich zur Herstellung der verschiedensten Formkörper, Platten, Flächengebilde oder von Rollware. Beispiele hierfür sind thermische oder akustische Isolier- oder Dämpfungsmaterialien, insbesondere in Plattenform. Weitere Beispiele sind die Verwendung in der Schuh-, Bekleidungs-, Möbel-, Sport-, Freizeitindustrie oder insbesondere in der Bauindustrie, beispielsweise zur Herstellung von Wand-, Boden- oder Deckenbelägen. Bevorzugt sind Dämmmaterialien, insbesondere Wand- oder Bodenbeläge. Die Verbundstoffe können als Rückseitenbeschichtungen von Bodenbelägen, wie Teppichen oder Deckensystemen, dienen. Hierbei können die Verbundstoffe das verpönte Bitumen ersetzen. Vorteilhafterweise führt der Einsatz der erfindungsgemäßen Verbundstoffe zur Dämmung des Raumschalls und zudem des Trittschalls und darüber hinaus zu einer thermischen Isolierung.

Die erfindungsgemäß hergestellten Verbundstoffe zeichnen sich durch hohe mechanische Festigkeiten aus, selbst bei sehr hohen Anteilen an anorganischen Materialien oder sonstigen Füllstoffen, und dies obwohl zur Herstellung der Verbundstoffe kleinteilige oder sogar staubartige Ausgangstoffe eingesetzt werden können. Überraschend war auch, dass anorganische, kleinteilige Reststoffe trotz uneinheitlicher Partikelgrößenverteilungen bei der erfindungsgemäßen Verwendung sehr gut verarbeitbar waren und zudem zu Verbundstoffen mit regelmäßigem Erscheinungsbild und homogenen anwendungstechnischen Eigenschaften führen. Durch Einsatz von redisperpergierbaren Polymerpulvern kann die mechanische Festigkeit weiter gesteigert werden. Beim Einsatz von Polymerpulvern mit einer erfindungsgemäßen Glasübergangstemperatur Tg des Basispolymerisats erhält man Formkörper, welche sich bei hoher mechanischer Festigkeit noch durch eine hohe Elastizität auszeichnen. Auch durch Einsatz Ethylenhaltiger Polymere kann die Elastizität der Verbundstoffe gesteigert werden. Die Verbundstoffe haben das natürliche Erscheinungsbild, wie Geruch, Haptik oder Optik, der anorganischen Materialien oder auch der organischen Füllstoffe, wie Kork. Hierfür sind insbesondere die geringen Polymeranteile vorteilhaft. Besonders vorteilhaft ist, dass kleinteiliger anorganischer Abfall in werthaltiger Weise verwertet werden kann und kostenträchtige anorganische oder auch organische Füllstoffe substituieren kann.

Die nachfolgenden Beispiele dienen zur weiteren Erläuterung der Erfindung:
Zur Testung wurden folgende Materialien eingesetzt:
Vinnex A: redispergierbares Polymerpulver der Wacker Chemie: Polyvinylalkohol stabilisiertes Polymerpulver auf Basis eines Vinylacetat-Ethylen-Copolymers mit einer Tg von -7°C.
Vinnex B: redispergierbares Polymerpulver der Wacker Chemie: Polyvinylalkohol stabilisiertes Polymerpulver auf Basis eines Vinylacetat-Ethylen-Copolymers mit einer Tg von -14°C.

### Gips-Schleifstaub:

Partikelgröße von 0,2 µm bis 250 µm (bestimmt nach der Methode der statistischen Lichtstreuung mittels TGV-Coulter LS 13320); Maximum der Partikelgrößenverteilung bei 15 µm (bestimmt nach der Methode der statistischen Lichtstreuung mittels TGV-Coulter LS 13320).

Korkpartikel von Amorim mit einer Korngröße von 1 bis 2 mm.

Die genannten Materialien wurden in den in der Tabelle genannten Mengenverhältnissen in einem Heiß-Kühl-Mischer bis zu einer Mischendtemperatur von 80°C homogen gemischt und anschließend auf 40°C abgekühlt. Danach auf einem gegenläufigen ZweiWellenextruder Weber DS 48 zu Granulaten mit einem Durchmesser von 2 bis 6 mm verarbeitet.

Das Granulat wurde auf einer statischen Presse bei einer Temperatur von 150°C und einem Druck von 5 N/mm² und einer Presszeit von 5 min zu Pressplatten mit einer Dicke von 2 mm bzw. 6 mm verarbeitet.

Die Shore-Härte A wie auch die Shore-Härte D der Pressplatten wurde nach DIN 53505 bestimmt.

Die mechanische Festigkeit der Pressplatten wurde im Zugversuch durch Ermittlung der Zugspannung und Dehnung bei Bruch gemäß DIN EN ISO 527 1-3 bzw. DIN 53504 bestimmt.

Die Ergebnisse sind in der Tabelle zusammengefasst.

**Tabelle:**

| Rezeptur | Bsp. 1 | Bsp. 2 | Bsp. 3 |
|---|---|---|---|
| | | | |
| Gips-Schleifstaub [kg] | 70 | 55 | 70 |
| Vinnex A [kg] | 30 | 30 | |
| Vinnex B [kg] | | | 30 |
| Korkpartikel [kg] | | 15 | |
| | | | |
| Shore A | 85,1 | 89,8 | 80,7 |
| Shore D | 25,4 | 33,8 | 19,8 |
| | | | |
| Zugspannung [MPa] | 6, 67 | 5,45 | 3,23 |
| Dehnung [%] | 17,12 | 23,1 | 71,35 |

## Patentansprüche

1. Verwendung von Mischungen enthaltend ein oder mehrere anorganische, kleinteilige Reststoffe und ein oder mehrere Polymere auf Basis ethylenisch ungesättigter Monomere zur Herstellung von Verbundstoffen mittels thermoplastischer Umformungstechniken, **dadurch gekennzeichnet, dass** Polymere auf Basis ethylenisch ungesättigter Monomere in Form von Schutzkolloid-stabilisierten, in Wasser redispergierbaren Polymerpulvern eingesetzt werden.

2. Verwendung von Mischungen zur Herstellung von Verbundstoffen nach Anspruch 1, **dadurch gekennzeichnet, dass** die anorganischen, kleinteiligen Reststoffe auf anorganischen Materialien basieren ausgewählt aus der Gruppe umfassend Oxide, Hydroxide, Carbonate, Silicate, Sulfate und Sulfide von Metallen oder Halbmetallen.

3. Verwendung von Mischungen zur Herstellung von Verbundstoffen nach Anspruch 1 oder 2, **dadurch gekennzeichnet, dass** die anorganischen, kleinteiligen Reststoffe auf anorganischen Materialien basieren ausgewählt aus der Gruppe umfassend Gips, Kalk, Talk, Kieselsäuren, Kaolinen, Silicaten und Titandioxid.

4. Verwendung von Mischungen zur Herstellung von Verbundstoffen nach Anspruch 1 bis 3, **dadurch gekennzeichnet, dass** die anorganischen, kleinteiligen Reststoffe beim Schleifen, Mahlen, Fräsen, Sägen, Bohren, Schälen oder Schneiden oder als Abrieb von anorganischen Materialien anfallen.

5. Verwendung von Mischungen zur Herstellung von Verbundstoffen nach Anspruch 1 bis 4, **dadurch gekennzeichnet, dass** die Polymere auf einem oder mehreren ethylenisch ungesättigten Monomeren basieren ausgewählt aus der Gruppe umfassend Vinylester, (Meth)acrylsäureester, Vinylaromaten, Olefine, 1,3-Diene und Vinylhalogenide.

6. Verwendung von Mischungen zur Herstellung von Verbundstoffen nach Anspruch 1 bis 5, **dadurch gekennzeichnet, dass** die Verbundstoffe auf 5 bis 80 Gew.-% an Polymeren auf Basis ethylenisch ungesättigter Monomere und 20 bis 95 Gew.-% an anorganischen, kleinteiligen Reststoffen basieren, bezogen auf das Gesamtgewicht aus Polymer auf Basis ethylenisch ungesättigter Monomere und anorganischen, kleinteiligen Reststoffen.

7. Verwendung von Mischungen zur Herstellung von Verbundstoffen nach Anspruch 1 bis 6, **dadurch gekennzeichnet, dass** ein oder mehrere organische Füllstoffe und/oder ein oder mehrere weitere, von den anorganischen, kleinteiligen Reststoffen verschiedene anorganische Füllstoffe eingesetzt werden.

8. Verwendung von Mischungen zur Herstellung von Verbundstoffen nach Anspruch 1 bis 7, **dadurch gekennzeichnet, dass** die Mischungen mittels thermoplastischer Umformungstechniken ausgewählt werden aus der Gruppe umfassend Extrudieren, Spritzgießen, Verpressen, Granulieren und Kalandrieren verarbeitet werden.

9. Verwendung von Mischungen zur Herstellung von Verbundstoffen nach Anspruch 1 bis 8, **dadurch gekennzeichnet, dass** es sich bei den Verbundstoffen um Formkörper, Platten, Flächengebilde oder Rollware handelt, wie thermische oder akustische Isolier- oder Dämpfungsmaterialien, beispielsweise für die Schuh-, Bekleidungs-, Möbel-, Bodenbelags-, Sport-, Freizeit- oder Bauindustrie.

## Claims

1. Use of mixtures containing one or more inorganic, fine residual materials and one or more polymers based on ethylenically unsaturated monomers for producing composites by means of thermoplastic forming techniques, **characterized in that** polymers based on ethylenically unsaturated monomers in the form of protective colloid-stabilized, water-redispersible polymer powders are used.

2. Use of mixtures for producing composites according to Claim 1, **characterized in that** the inorganic, fine residual materials are based on inorganic materials selected from the group consisting of oxides, hydroxides, carbonates, silicates, sulfates and sulfides of metals or semimetals.

3. Use of mixtures for producing composites according to Claim 1 or 2, **characterized in that** the inorganic, fine residual materials are based on inorganic materials selected from the group consisting of gypsum, lime, talc, silicas, kaolins, silicates and titanium dioxide.

4. Use of mixtures for producing composites according to any of Claims 1 to 3, **characterized in that** the inorganic, fine residual materials are obtained during grinding, comminution, machine milling, sawing, drilling, peeling or cutting or as abrasion from inorganic materials.

5. Use of mixtures for producing composites according to any of Claims 1 to 4, **characterized in that** the polymers are based on one or more ethylenically unsaturated monomers selected from the group consisting of vinyl esters, (meth)acrylic esters, vinylaromatics, olefins, 1,3-dienes and vinyl halides.

6. Use of mixtures for producing composites according to any of Claims 1 to 5, **characterized in that** the composites are based on from 5 to 80% by weight of polymers based on ethylenically unsaturated monomers and from 20 to 95% by weight of inorganic, fine residual materials, based on the total weight of polymer based on ethylenically unsaturated monomers and inorganic, fine residual materials.

7. Use of mixtures for producing composites according to any of Claims 1 to 6, **characterized in that** one or more organic fillers and/or one or more further inorganic fillers which are different from the inorganic fine residual materials are used.

8. Use of mixtures for producing composites according to any of Claims 1 to 7, **characterized in that** the mixtures are processed by means of thermoplastic forming techniques selected from the group consisting of extrusion, injection molding, pressing, pelletization and calendering.

9. Use of mixtures for producing composites according to any of Claims 1 to 8, **characterized in that** the composites are moldings, boards, sheet-like structures or rolled-up goods, e.g. thermal or acoustic insulating or damping materials, for example for the shoe, clothing, furniture, floorcovering, sports, leisure or building industry.

## Revendications

1. Utilisation de mélanges contenant un ou plusieurs résidus inorganiques de petite taille et un ou plusieurs polymères à base de monomères éthyléniquement insaturés pour la fabrication de matières composites par des techniques de façonnage thermoplastiques, **caractérisée en ce que** des polymères à base de monomères éthyléniquement insaturés sous la forme de poudres polymères redispersibles dans l'eau, stabilisées par des colloïdes protecteurs, sont utilisés.

2. Utilisation de mélanges pour la fabrication de matières composites selon la revendication 1, **caractérisée en ce que** les résidus inorganiques de petite taille sont à base de matériaux inorganiques choisis dans le groupe comprenant les oxydes, les hydroxydes, les carbonates, les silicates, les sulfates et les sulfures de métaux ou de semi-métaux.

3. Utilisation de mélanges pour la fabrication de matières composites selon la revendication 1 ou 2, **caractérisée en ce que** les résidus inorganiques de petite taille sont à base de matériaux inorganiques choisis dans le groupe comprenant le gypse, la chaux, le talc, les silices, les kaolins, les silicates et le dioxyde de titane.

4. Utilisation de mélanges pour la fabrication de matières composites selon les revendications 1 à 3, **caractérisée en ce que** les résidus inorganiques de petite taille se forment lors du meulage, du broyage, du fraisage, du sciage, du perçage, du pelage ou de la découpe ou en tant que produit d'abrasion de matériaux inorganiques.

5. Utilisation de mélanges pour la fabrication de matières composites selon les revendications 1 à 4, **caractérisée en ce que** les polymères sont à base d'un ou de plusieurs monomères éthyléniquement insaturés choisis dans le groupe comprenant les esters de vinyle, les esters de l'acide (méth)acrylique, les composés aromatiques de vinyle, les oléfines, les 1,3-diènes et les halogénures de vinyle.

6. Utilisation de mélanges pour la fabrication de matières composites selon les revendications 1 à 5, **caractérisée en ce que** les matières composites sont à base de 5 à 80 % en poids de polymères à base de monomères éthyléniquement insaturés et 20 à 95 % en poids de résidus inorganiques de petite taille, par rapport au poids total de polymère à base de monomères éthyléniquement insaturés et de résidus inorganiques de petite taille.

7. Utilisation de mélanges pour la fabrication de matières composites selon les revendications 1 à 6, **caractérisée en ce qu'**une ou plusieurs charges organiques et/ou une ou plusieurs charges inorganiques supplémentaires, différentes des résidus inorganiques de petite taille, sont utilisées.

8. Utilisation de mélanges pour la fabrication de matières composites selon les revendications 1 à 7, **caractérisée en ce que** les mélanges sont transformés par des techniques de façonnage thermoplastiques choisies dans le groupe comprenant l'extrusion, le moulage par injection, la compression, la granulation et le calandrage.

9. Utilisation de mélanges pour la fabrication de matières composites selon les revendications 1 à 8, **caractérisée en ce que** les matières composites sont des corps moulés, des plaques, des structures plates ou des rouleaux, tels que des matériaux isolants ou amortissants thermiques ou acoustiques, par exemple pour l'industrie des chaussures, des vêtements, des meubles, des revêtements de sol, du sport, des loisirs ou de la construction.
